**Europäisches Patentamt**

**European Patent Office**

**Office européen des brevets**

(11) Veröffentlichungsnummer: **0 520 314 A1**

## (12) EUROPÄISCHE PATENTANMELDUNG

(21) Anmeldenummer: **92110233.1**

(22) Anmeldetag: **17.06.92**

(51) Int. Cl.5: **H02G 3/06**, H02G 3/08

(30) Priorität: **26.06.91 DE 9107852 U**

(43) Veröffentlichungstag der Anmeldung:
**30.12.92 Patentblatt 92/53**

(84) Benannte Vertragsstaaten:
**AT BE CH DK ES FR GB GR IT LI LU NL SE**

(71) Anmelder: **Raimund Andris GmbH & Co. KG**
**Spohnplatzstrasse 5**
**W-7730 Villingen-Schwenningen 22(DE)**

(72) Erfinder: **Andris, Raimund**
**Tannhörnle 9**
**W-7730 Villingen-Schwenningen 22(DE)**

(74) Vertreter: **Neymeyer, Franz, Dipl.-Ing. (FH)**
**Haselweg 20**
**W-7730 Villingen-Schwenningen 24(DE)**

(54) **Verbindungsrohr für Hohlwanddosen.**

(57) Zur Überbrückung des Zwischenraums zwischen zwei sich gegenüberliegenden, im wesentlichen kreisrunden Durchstecköffnungen (9/1, 10/2) zweier in einem bestimmten Abstand voneinander in einer Hohlwand (14/1) angeordneten Hohlwanddosen (1/1, 1/2), bei denen die Durchstecköffnungen (9/1, 10/2) jeweils in einem schräg, z.B. unter einem Winkel von 45°, zur Mittelachse (24/1, 24/2) der Hohlwanddose (1/1, 1/2) verlaufenden Bodenabschnitt (5/1, 6/2) angeordnet sind, ist ein Verbindungskanal vorgesehen, der als Verbindungsrohr (23) ausgebildet ist. Dieses Verbindungsrohr weist einen elliptischen, sich aus der Schräglage der Durchstecköffnungen (9, 9/1, 9/2, 10, 10/1, 10/2) ergebenden Querschnitt auf. An einem Ende ist es auf den Außenflächen der Wandabschnitte mit geringerer Krümmung mit Anschlagelementen (26, 27, 28) versehen, und einer dieser flacheren Wandabschnitte ist mit einer Rastnase (38) und mit einem über dieses Ende hinausragenden Wipphebel (41) versehen.

**Fig. 5**

Die Erfindung betrifft einen Verbindungskanal zur Überbrückung des Zwischenraums zwischen sich jeweils gegenüberliegenden im wesentlichen kreisrunden Durchstecköffnungen zweier in einem bestimmten Abstand zueinander in einer Hohlwand angeordneten Hohlwanddosen, wobei die Durchstecköffnungen jeweils in einem schräg, z.B. unter einem Winkel von 45°, zur Mittelachse der Hohlwanddose verlaufenden Bodenabschnitt der Hohlwanddose angeordnet sind.

Es ist eine Hohlwanddose (DE-A 37 18 379) bekannt, die aus einem dünnwandigen, im wesentlichen hohlzylindrischen Dosenkörper besteht. Der Boden des Dosenkörpers besteht aus einem mittleren, planebenen Bodenabschnitt sowie aus zwei sich daran anschließenden, symmetrisch dazu angeordneten unter 45° schrägen Bodenabschnitten mit ausbrechbaren, kreisrunden Durchstecköffnungen. Diese Hohlwanddose ist durch einen in axialer Richtung zum Dosenkörper beweglichen Stützflansch und durch an der Außenseite des Dosenkörpers hintereinanderliegend angeordneten Sperrglieder an einer Hohlwandplatte befestigbar.

Bei der Anordnung mehrerer Hohlwanddosen nebeneinander ist für jede Hohlwanddose eine separate Montageöffnung in der Hohlwandplatte vorgesehen. Es ist deshalb nicht möglich die Hohlwanddosen mit einem im Bodenbereich, radial zur Dosenachse verlaufenden Rohrstutzen zu versehen, durch welchen jeweils zwei benachbarte Hohlwanddosen vor der Montage miteinander verbunden werden könnten.

Solche Rohrstutzen sind beispielsweise bei Unterputzdosen (DE-PS 38 43 799) bekannt. Der Abstand nebeneinander angeordneter Hohlwanddosen und auch Unterputzdosen ist, so fern diese Dosen zur Aufnahme von Steckdosen oder Lichtschaltern dienen genormt, da für diese Steckdosen bzw. Lichtschalter blendenartige Abdeckungen vorgesehen sind, welche diesen genormten Abstand vorgeben.

Die mehrfach angeordneten Hohlwanddosen sind so zueinander ausgerichtet, daß deren Durchstecköffnungen sich jeweils paarweise gegenüberliegen.

Bei der Verkabelung der Steckdosen bzw. Lichtschalter müssen die Elektrokabel von einer Hohlwanddose zur anderen geführt werden. Das Durchfädeln der Elektroleitungen von einer Durchstecköffnung zur anderen ist dabei regelmäßig mit Schwierigkeiten verbunden, da keinerlei Führungselemente, wie z.B. die Rohrstutzen bei Unterputzdosen, vorhanden sind.

Der Erfindung liegt demgemäß die Aufgabe zugrunde, ein Leitungsführungselement zu schaffen, welches nachträglich zur Verbindung zweier Durchstecköffnungen von zwei benachbarten Hohlwanddosen anbringbar ist, wobei die Montage dieses Verbindungselementes sowohl von der offenen Hohlwanddosenseite her als auch von deren Rückseite her möglich sein soll.

Die Aufgabe wird erfindungsgemäß dadurch gelöst, daß der Vebindungskanal als Verbindungsrohr ausgebildet ist, das einen elliptischen, sich aus der Schräglage der Durchstecköffnungen ergebenden Querschnitt aufweist und das an einem Ende auf den Außenflächen der Wandabschnitte mit geringerer Krümmung mit Anschlagelementen versehen ist und daß einer dieser flacheren Wandabschnitte mit einer Rastnase und mit einem über dieses Ende hinausragenden Wipphebel versehen ist.

Durch die erfindungsgemäße Ausgestaltung des Verbindungskanals ist dieser in einfacher Weise zwischen zwei benachbarten Hohlwanddosen montierbar. Ist das Verbindungsrohr etwa bis zu einem Drittel seiner Länge in die Durchstecköffnung der einen Hohlwanddose eingesteckt, kann es mittels des Wipphebels auf die gegenüberliegende Durchstecköffnung der benachbarten Hohlwanddose ausgerichtet und eingeschoben werden. Durch die Öffnungsrand anliegenden Anschlagflächen wird ein Durchschieben durch die erste Durchstecköffnung verhindert. Ist das Verbindungsrohr so weit eingeschoben, daß die Anschlagflächen noch nicht an dem schrägen Bodenabschnitt der Hohlwanddose anliegen, so wird durch Drücken auf den Wipphebel in Richtung auf den Dosenboden das Verbindungsrohr auf die Öffnung der gegenüberliegenden Kohlwanddose ausgerichtet und dann durch axiales Verschieben die Rastnase zum Einrasten gebracht, wodurch das Verbindungsrohr in der einen Hohlwanddose fest fixiert ist.

Gemäß der Ausgestaltungen nach Anspruch 2 und 3 ist sichergestellt, daß das Verbindungsrohr rückseitig senkrecht durch eine Durchstecköffnung einer Hohlwanddose durchsteckbar ist, wodurch erreicht wird, daß das Verbindungsrohr ebenfalls von der Rückseite her zwischen zwei Hohlwanddosen zur Verbindung der gegenüberliegenden Durchstecköffnungen nachträglich einsetzbar ist.

Durch die Ausgestaltung gemäß Anspruch 4 ist eine leichte Zugänglichkeit zum Durchschieben von Elektrokabeln oder Leitungen durch das Verbindungsrohr gewährleistet.

Die Ausgestaltung nach Anspruch 5 gewährleistet eine sichere Ausrichtung des Verbindungsrohrs bei der Montage und gleichzeitig einen sicheren Sitz in der Durchstecköffnung.

Weitere vorteilhafte Ausgestaltungen sind den Ansprüchen 6 und 7 zu entnehmen.

Anhand der Zeichnung wird die Erfindung im folgenden näher erläutert. Es zeigt:

Fig. 1    eine Draufsicht einer Hohlwanddose;

Fig. 2    einen Schnitt II-II aus Fig. 1;

Fig. 3    eine Draufsicht und eine Stirnansicht eines Verbindungsrohres;

Fig. 4      eine Seitenansicht des Verbindungsrohrs;

Fig. 5      einen Schnitt V-V aus Fig. 2.

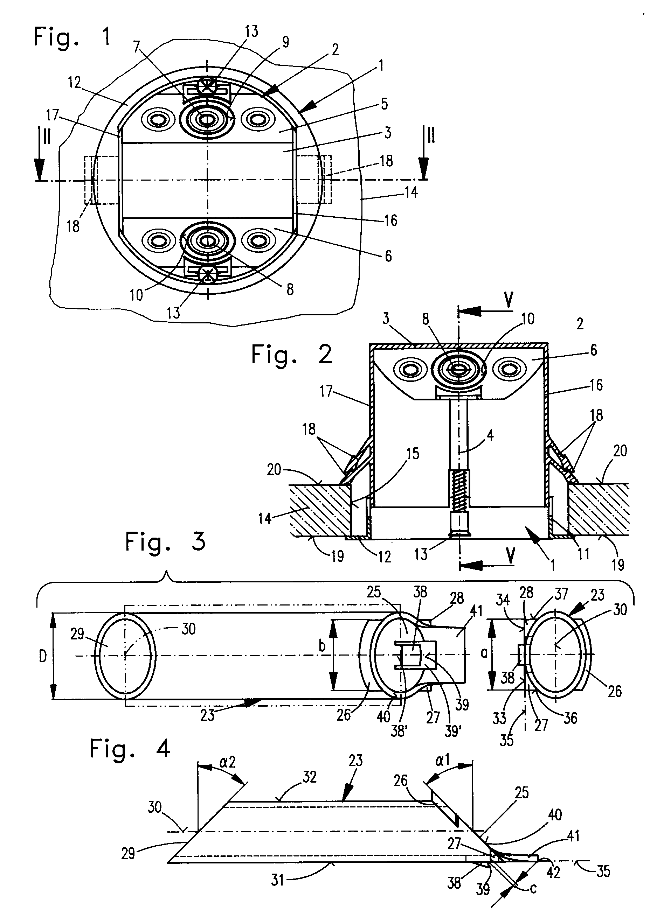

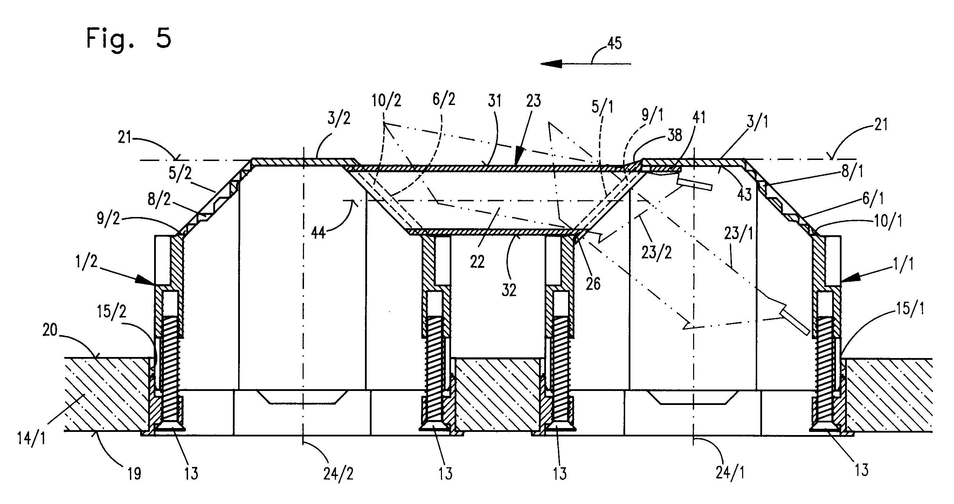

Die in den Fig. 1, 2 dargestellte Hohlwanddose 1 besteht aus einem dünnwandigen, im wesentliche hohlzylindrischen Dosenkörper 2, dessen Boden aus einem mittleren, planebenen Bodenabschnitt 3 und aus zwei sich daran anschließenden, symmetrisch dazu angeordneten, unter einem Winkel von etwa 45° (Fig. 5) zur Mittelachse der Hohlwanddose 1 verlaufenden schrägen Bodenabschnitten 5 und 6 gebildet ist. Die Bodenabschnitte 5 und 6 sind jeweils mit ausbrechbaren, kreisförmigen Wandabschnitten 7, 8 versehen, welche jeweils eine Durchstecköffnung 9, 10 verschließen. Die Durchstecköffnungen 9 bzw. 10 weisen in senkrechter Ansicht zum Bodenabschnitt 4 bzw. 5 einen kreisrunden Querschnitt auf.

An seiner offenen Seite weist der Dosenkörper 2 einen mit einem Führungsring 11 versehenen Stützflansch 12 auf. Der Stützflansch 12 ist gegenüber dem Dosenkörper 2 axial beweglich und mittels wenigstens zweier Schrauben 13 am Dosenkörper 2 axial einstellbar befestigt.

Zur Montage wird die Hohlwanddose 1 im vormontierten Zustand, d.h. mit angeschraubtem Stützflansch 12, in eine in einer Hohlwand 14 angebrachte Montageöffnung 15 eingeschoben. Der Durchmesser der Montageöffnung 15 entspricht in etwa dem Durchmesser der Hohlwanddose 1. Der Dosenkörper 2 ist mit jeweils zwei planparallelen, sich diametral gegenüberliegenden, parallel zur Mittelachse 4 verlaufenden Seitenwänden 16 und 17 versehen, welche an ihren Außenseiten jeweils mit radial-elastisch nach außen schwenkbaren Sperrgliedern 18 versehen sind. Die Sperrglieder 18 werden beim Einschieben der Hohlwanddose 1 mit ihrem Dosenkörpers 2 in die Montageöffnung 15 radial nach innen gedrückt und spreizen sich nach Durchtritt durch die Montageöffnung 15 wieder radial nach außen. Die Hohlwanddose 1 wird so weit in die Montageöffnung 15 eingeschoben, bis ihr Stützflansch 12 auf der Außenseite 19 der Hohlwand 14 anliegt. Beim Anziehen der Befestigungsschrauben 13 kommt das letzte durch die Montageöffnung 15 vollständig hindurchgetretene Paar von Sperrgliedern 18 auf der Rückseite 20 der Hohlwand 14 zur Anlage. Durch weiteres Anziehen der Befestigungsschrauben 13 wird die Hohlwanddose 1 in der Montageöffnung 15 festsitzend verspannt.

Fig. 5 zeigt zwei in einer Hohlwand 14/1 nebeneinander angeordnete Hohlwanddosen 1/1, 1/2, welche jeweils in einer separate Montageöffnung 15/1 bzw. 15/2 einer Hohlwand 14/1 montiert sind. Die Montageöffnungen 15/1, 15/2 sind dabei in einem definierten, in der Regel genormten Abstand zueinander angeordnet. Die Hohlwanddosen 1/1 und 1/2 sind so in der Hohlwand 14/1 montiert, daß ihre planebenen mittleren Bodenabschnitte 3/1, 3/2 in einer gemeinsamen Bodenebene 21 liegen, die in etwa planparallel zur Hohlwand 14/1 verläuft.

Zur Überbrückung des Zwischenraumes 22 zwischen den sich gegenüberliegenden Durchstecköffnungen 9/1 und 10/2 der beiden benachbarten Hohlwanddosen 1/1, 1/2 ist ein Verbindungsrohr 23 vorgesehen (Fig. 5).
Die nähere Ausgestaltung dieses Verbindungsrohres 23 ist aus den Fig. 3 und 4 ersichtlich. Das Verbindungsrohr 23 weist einen elliptischen Querschnitt auf, dessen Ellipsenform sich aus der Projektion des kreisförmigen Querschnittes einer Durchstecköffnung 9 bzw. 10 in eine rechtwinklig zum mittleren Bodenabschnitt 3 verlaufenden Projektionsebene 24 (und 24/1, 24/2 in Fig. 5) ergibt, welche der Schnittebene II-II aus Fig. 1 entspricht.

Im Bereich der jeweils kleineren elliptischen Krümmungen, d.h. im Bereich seiner der beiden flacheren Wandabschnitte ist das Verbindungsrohr 23 an einer seiner Stirnkanten 25 mit radial nach außen vorspringenden Anschlagelementen 26, 27, 28 versehen. Die beiden Stirnkanten 25 und 29 verlaufen schräg zur Längsmittelebene 30 des Verbindungsrohres 23, welche durch den größten Durchmesser des Verbindungsrohres 23 definiert ist. Die Neigungswinkel $Á1$ und $Á2$ der beiden Stirnkanten 25 und 29 ergeben sich aus der Schräglage der Bodenabschnitte 5 bzw. 6 des Dosenkörpers 2 und betragen ebenfalls etwa 45°. Die Stirnkanten 25 und 29 verlaufen so schräg zueinander, daß das Verbindungsrohr 23 eine lange Flachseite 31 und eine kurze Flachseite 32 aufweist.

Das Anschlagelement 26 weist eine Breite b auf, die kleiner ist als der maximale Durchmesser D des Verbindungsrohres 23, wobei deren maximal zulässige Breite durch den maximalen Durchmesser D des Verbindungsrohres 23 bestimmt ist.

Die Anschlagelemente 27 und 28 weisen jeweils planebene Außenflächen 33 bzw. 34 auf, welche parallel zur Längsmittelebene 30 verlaufen und in einer gemeinsamen Tangentialebene 35 des Verbindungsrohres 23 liegen. Der Abstand a, den die seitlichen Begrenzungsflächen 36, 37 der Anschlagelemente 27, 28 voneinander haben, ist ebenfalls kleiner als der oder maximal gleich dem größten Durchmesser D des elliptischen Verbindungsrohres 23 und entspricht in diesem Ausführungsbeispiel der Breite b des Anschlagelementes 26.

Zwischen den beiden Anschlagelementen 27 und 28 ist an einer durch eine U-förmigen Ausnehmung 39' freigeschnittene radial elastischen Zunge 38' eine radial nach außen vorstehende Rastnase 38 vorgesehen, deren stirnseitige Sperrfläche 39 zu den schräg verlaufenden Anschlagelementen 27, 28 einen Abstand c aufweist, welcher etwa der Wanddicke des Dosenkörpers 2 entspricht. An dem der Stirnkante 25 benachbarten Endabschnitt, an welchem sowohl die Anschlagelemente 26, 27, 28 als auch die Rastnase 38 angeordnet sind, ist im Bereich der langen Flachseite 31 des Verbindungsrohres 23 ein zungenartiger Wipphebel 39 vorgesehen, der das Verbindungsrohr 23 stirnseitig achsparallel überragt. Im Übergangsbereich vom Wipphebel 41 zum Verbindungsrohr 23 ist der Wipphebel 41 in seiner Querschnittsform der gekrümmten Form des Verbindungsrohrs 23 angepaßt. Die untere Endkante 42 des Wipphebels 41 liegt in der Tangentialebene 35, in der auch die beiden Außenflächen 33 und 34 liegen. Es ist auch vorstellbar, daß die Querschnittsform des Wippbels 41 auf seiner gesamten Länge der gekrümmten Form des Verbindungsrohres 23 entspricht.

Zur Montage wird das Verbindungsrohr 23 mit der ohne Anschlagelemente versehenen Stirnkante 29 in die Durchsteeköffnung 9/1 der Hohlwanddose 1/1 eingeführt (Fig. 5) und während der Einsteckbewegung in Richtung auf die gegenüberliegende Durchsteeköffnung 10 der zweiten Hohlwanddose 1/2 ausgerichtet. Zur leichteren Handhabung dient dabei der über das Verbindungsrohr 23 an seiner längeren Flachseite 31 hinausragende Wipphebel 41. In Fig. 4 ist das Verbindungsrohr 23 sind beispielhaft in zwei Positionen 23/1, 23/2 dieses Montagevorgangs in Phantomlinien gezeigt. Ist das Verbindungsrohr 23 ausgerichtet und in der gegenüberliegenden Durchsteeköffnung 10/2 eingesteckt, so daß es mit seinen Anschlagelementen 26, 27, 28 an dem schrägen Bodenabschnitt 6/2 anliegt, so wird durch eine weitere Schiebewegung in Richtung des Pfeiles 45 mittels eines entsprechenden Fingerdrucks auf die Stirnkante 40 die Rastnase 38 hinter der Randkante der Durchsteeköffnung 9/1 zum Einrasten und gleichzeitig die Anschlagelemente zur Anlage am Rand der Durchsteeköffnung 9/1 gebracht. Damit ist der Montagevorgang abgeschlossen und das Verbindungsrohr 23 in der Durchsteeköffnung 9/1 axial fest fixiert. Auf Grund des schrägen Verlaufs des Bodenabschnittes 5/1 und des Anschlagelementes 26 im Zusammenwirken mit der Rastnase 38 ist das Verbindungsrohr 23 auch gegen Verdrehen gesichert.

Als zusätzliche Verdrehsicherung dienen die Außenflächen 33, 34 der Anschlagelemente 27, 28, die im fertig montierten Zustand auf der planebenen Innenfläche 43 des mittleren Bodenabschnittes 3/1 der Hohlwanddose 1/1 aufliegen. In gleicher Weise kommt auch die Endkante 42 des Wipphebels 41 auf der Innenfläche 43 zur Anlage, so daß ein selbständiges Verdrehen des Verbindungsrohres 23 in den Durchsteeköffnungen 9/1, 10/2, z.B. beim Hindurchführen von Elektroleitungen, ausgeschlossen ist.

Auf Grund der elliptischen Formgebung des Verbindungsrohres 23 sowie der begrenzten äußeren Abmessungen der Anschlagelemente 26, 27, 28 und der Rastnase 38 ist es ebenfalls möglich das Verbindungsrohr 23 von der Rückseite zwischen zwei Hohlwanddosen 1/1 und 1/2 einzusetzen. Dies ist dann vorteilhaft, wenn eine Hohlwand 14, beispielsweise eine Frontwand eines Kabelkanals, abnehmbar ausgebildet ist oder, wenn die Möglichkeit besteht, eine Hohlwand 14, 14/1 nach der Montage der Hohlwanddosen 1, 1/1, 1/2 an einer Wand anzubringen, wie dies beispielsweise bei Holzverkleidungen der Fall sein kann.

Die Montage des Verbindungsrohrs 23 von der Rückseite einer solchen Frontwand aus ist auf Grund der wesentliche besseren Zugänglichkeit einfacher und weniger zeitintensiv als durch die offene Frontseite der Hohlwanddose 1, 1/1, 1/2.

Zum rückwärtigen Einsetzen des Verbindungsrohres 23 in die Hohlwanddose 1/1 wird dieses in eine senkrechte Position zum schrägen Bodenabschnitt 5/1 gebracht. Da die größten Außenabmessungen sowohl der Anschlagelemente 26, 27, 28 und der Rastnase 38 als auch der maximale Außendurchmesser des Verbindungsrohres 23 maximal dem Durchmesser der Durchsteeköffnung 9/1 entsprechen, ist gewährleistet daß das Verbindungsrohr 23 senkrecht zur Durchsteeköffnung 9/1 mit ihren Anschlagelementen 26, 27, 28 und ihrer Rastnase 36 durch die Durchsteeköffnung 9/1 hindurchsteckbar ist. Durch Schwenken des Verbindungsrohres 23 in eine parallel zur Bodenebene 21 verlaufende Montageebene 44 kommt das Verbindungsrohr 23 mit seiner elliptischen Mantelfläche in der Durchsteeköffnung 9/1 zur Anlage. Gleichzeitig mit dem Schwenkvorgang wird das Verbindungsrohr 23 auf die gegenüberliegende Durchsteeköffnung 10/2 der benachbarten Hohlwanddose 1/2 ausgerichtet und wird aus dieser Lage in die Durchsteeköffnung 10/2 eingeschoben, bis die Anschlagelemente 26, 27, 28 an der Innenseite des schrägen Bodenabschnittes 5/1 der ersten Hohlwanddose 1/1 zur Anlage kommen. In dieser Stellung rastet gleichzeitig die Rastnase 38 mit ihrer Rastfläche 39 außenseitig hinter der Durchsteeköffnung 9/1 ein.

Das Verbindungsrohr 23 ist somit in einfacher Weise sowohl frontseitig als auch von der Rückseite her in die Durchsteeköffnungen 9/1 und 10/2 zweier Hohlwanddosen 1/1, 1/2 einsetzbar. In seiner Länge ist das Verbindungsrohr 23 dem entsprechenden Abstand zweier Hohlwanddosen 1/1, 1/2 angepaßt, so daß der Innraum der Hohlwanddosen 1/1, 1/2 zur Aufnahme von elektrischen Installationselementen nicht eingeschränkt ist. Als Werkstoff ist ein Kunststoff vorgesehen, so daß die Fertigungskosten äußerst gering gehalten werden. Dabei ist es auch vorstellbar, das Verbindungsrohr 23 in "Überlängen" zu fertigen, so daß es variabel an unterschiedliche Abstände der Hohlwanddosen 1/1, 1/2 bzw. deren Durchstecköffnungen 9/1, 10/2 und auch an unterschiedlich schräge Verläufe der schrägen Bodenabschnitte 5, 5/1, 5/2, 6, 6/1, 6/2 anpaßbar ist.

**Patentansprüche**

1.  Verbindungskanal zur Überbrückung des Zwischenraums zwischen sich jeweils gegenüberliegenden im wesentlichen kreisrunden Durchstecköffnungen zweier in einem bestimmten Abstand zueinander in einer Hohlwand angeordneten Hohlwanddosen, wobei die Durchstecköffnungen jeweils in einem schräg, z.B. unter einem Winkel von 45°, zur Mittelachse der Hohlwanddose verlaufenden Bodenabschnitt der Hohlwanddose angeordnet sind, dadurch gekennzeichnet, daß der Verbindungkanal als Verbindungsrohr (23) ausgebildet ist, das einen elliptischen, sich aus der Schräglage der Durchstecköffnungen (9, 9/1, 9/2, 10, 10/1, 10/2) ergebenen Querschnitt aufweist und das an einem Ende auf den Außenflächen der Wandabschnitte mit geringerer Krümmung mit Anschlagelementen (26, 27, 28) versehen ist und daß einer dieser flacheren Wandabschnitte mit einer Rastnase (38) und mit einem über dieses Ende hinausragenden Wipphebel (41) versehen ist.

2.  Verbindungskanal nach Anspruch 1, dadurch gekennzeichnet, daß die Anschlagelemente (26, 27, 28) eine Breite (b) aufweisen, die maximal dem größten Durchmesser (D) des elliptischen Verbindungsrohres (23) entspricht.

3.  Verbindungskanal nach Anspruch 1 oder 2, dadurch gekennzeichent, daß die maximalen Außenmaße der sich gegenüberliegenden Anschlagelemente (26, 27, 28) und der Rastnase (38) höchstens gleich groß sind wie der Durchmesser der Durchstecköffnung (9, 9/1, 9/2, 10, 10/1, 10/2) bzw. wie der größte Durchmesser (D) des Verbindungsrohres (23).

4.  Verbindungskanal nach einem der Ansprüch 1 bis 3, dadurch gekennzeichent, daß die beiden Stirnkanten (25, 29) des Verbindungsrohres (23) entsprechend der Schräglage der Durchstecköffnungen (9, 9/1, 9/2, 10, 10/1, 10/2) abgeschrägt sind.

5.  Verbindungskanal nach einem der Ansprüche 1 bis 4, dadurch gekennzeichent, daß die Anschlagelemente (26, 27, 28) parallel zur schrägen Stirnkante (25) des Verbindugnsrohres (23) verlaufen.

6.  Verbindungskanal nach einem der Ansprüche 4 oder 5, dadurch gekennzeichent, daß die Rastnase (38) auf der längeren Flachseite (31) des Verbindungsrohres (23) angeordnet ist.

7.  Verbindungskanal nach einem der Ansprüche 1 bis 6, dadurch gekennzeichent, daß die rastnasenseitigen Anschlagelemente (27, 28) mit planebenen Außenflächen (33, 34) versehen sind, die parallel zu einer durch den größten Durchmesser (D) des Verbindungsrohres (23) definierten Längsmittelebene (30) verlaufen.

8.  Verbindungskanal nach einem der Ansprüche 1 bis 7, dadurch gekennzeichent, daß die Stirnkante (42) des Wipphebels (41) in einer Tangentialebene (35) des Verbindungsrohres (23) liegt, welche parallel zu der durch den größten Druchmesser (D) definierten Längsmittelebene (30) verläuft, und daß der Wipphebel (41) im Übergangsbereich zum Verbindungsrohr (23) in seiner Form dem Rohrquerschnitt angepaßt ist.

9.  Verbindungskanal nach einem der Ansprüche 1 bis 8, dadurch gekennzeichent, daß der Wipphebel (41) über seine gesamte Länge in seiner Form dem Rohrquerschnitt des Verbindungsrohres (23) angepaßt ist.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-1 882 021 (LAUER) --- | | H02G3/06 H02G3/08 |
| A | FR-A-1 003 407 (WARTSILA-YHTYMA) --- | | |
| A,D | EP-A-0 293 614 (RAIMUND) --- | | |
| D,A | DE-C-3 843 799 (RAIMUND) ----- | | |

| | RECHERCHIERTE SACHGEBIETE (Int. Cl.5 ) |
|---|---|
| | H02G |

Der vorliegende Recherchenbericht wurde für alle Patentansprüche erstellt

| Recherchenort | Abschlußdatum der Recherche | Prüfer |
|---|---|---|
| DEN HAAG | 07 OKTOBER 1992 | BERTIN M.H.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes
    Dokument

EPO FORM 1503 03.82 (P0403)